**Europäisches Patentamt**

**European Patent Office**

**Office européen des brevets**

(19)

(11) Veröffentlichungsnummer: **0 216 139**
**B1**

(12) **EUROPÄISCHE PATENTSCHRIFT**

(45) Veröffentlichungstag der Patentschrift: **08.08.90**

(21) Anmeldenummer: **86111464.3**

(22) Anmeldetag: **19.08.86**

(51) Int. Cl.$^5$: **C 08 F 291/00, C 08 F 285/00**

(54) Teilchenförmige Polymerisate mit verbesserten Eigenschaften zur Herstellung von Thermoplastformmassen.

(30) Priorität: **29.08.85 DE 3530818**

(43) Veröffentlichungstag der Anmeldung:
**01.04.87 Patentblatt 87/14**

(45) Bekanntmachung des Hinweises auf die Patenterteilung:
**08.08.90 Patentblatt 90/32**

(84) Benannte Vertragsstaaten:
**DE FR GB IT NL**

(56) Entgegenhaltungen:
**GB-A-2 060 662**

(73) Patentinhaber: **BAYER AG**
**D-5090 Leverkusen 1 Bayerwerk (DE)**

(72) Erfinder: **Lindner, Christian, Dr.**
**Riehler Strasse 200**
**D-5000 Koeln 60 (DE)**
Erfinder: **Ott, Karl-Heinz, Dr.**
**Paul-Klee-Strasse 54**
**D-5090 Leverkusen 1 (DE)**
Erfinder: **Wittmann, Dieter, Dr.**
**Doerperhofstrasse 15**
**D-4150 Krefeld 1 (DE)**
Erfinder: **Braese, Hans-Eberhard**
**Käthe-Kollwitz-Strasse 3**
**D-5000 Koeln 1 (DE)**

**Die Akte enthält technische Angaben, die nach dem Eingang der Anmeldung eingereicht wurden und die nicht in dieser Patentschrift enthalten sind.**

**Beschreibung**

Die Erfindung betrifft teilchenförmige Polymerisate, deren Herstellung und deren Verwendung als thermoplastische Kunststoffe. Teilchenförmige Polymerisate werden meist durch Emulsionspolymerisation hergestellt. Dies gilt insbesondere für Propfpolymerisate harzbildender Monomerer auf Kautschuk. Aus den Polymerisat-Emulsionen können — insbesondere im Falle der Pfropfpolymerisation — die Polymeren als Pulver gewonnen werden, die dann gegebenenfalls nach Mischung mit spröden Harzen (wie Styrol-Acrylnitril Copolymerisaten oder Polyvinylchlorid) thermoplastisch zu Formkörpern verarbeitbar sind.

Die Eigenschaften und die Qualität der verwendeten Polymerisat-Pulver sind für die Eigenschaften der Endprodukte bestimmend: Die Pulver müssen genügend gereinigt und entwässert, gut handhabbar und leicht dispergierbar in viskosen Thermoplastschmelzen.

Es wurde gefunden, daß man Polymerisat-Pulver und thermoplastische Formmassen mit verbesserten Eigenschaften erhält, wenn man teilchenförmige Pfropfpolymerisate einsetzt, auf deren Oberflächen geringe Mengen kautschukartiger Polymerisate in bestimmter Weise aufpolymerisiert oder propfpolymerisiert sind.

Gegenstand der Erfindung sind teilchenförmige Polymerisate mit mittleren Teilchendurchmessern $(d_{50})$ von 0,08—1,5 µm aus 90—99 Gew.% eines Kernmaterials aus Homo- oder Copolymerisat von Styrol, α-Methylstyrol, p-Methylstyrol, Methacrylsäureester, Acrylnitril, Methacrylnitril oder Maleinimid, pfropfpolymerisiert auf einen Kautschuk und 10—1 Gew.% auf die Oberfläche des Kernpolymerisats aufpolymerisierten Alkylacrylatkautschuken mit Glastemperaturen <30°C.

Das britische Patent 20 20 662 lehrt u.a. teilchenförmige Polymerisate aus Teilchen eines Polymerisats einer alkenylaromatischen Verbindung und eines Vinylcyanids auf deren Oberfläche ein konjugiertes Dien beispielsweise Polybutadien aufpolymerisiert ist. Diese Produkte stellen ein sehr aktives Polymerisat dar, das mit weiteren Monomeren umgesetzt werden kann. Es kann auch dazu dienen einen Proteinantikörper zu absorbieren und so zur immunologischen Diagnose zu dienen.

Bevorzugte teilchenförmige Polymerisate besitzen einen gewichtsmittleren Teilchendurchmesser ($d_{50}$-Wert) von 0,008 bis 1,5 µm, insbesondere 0,09—0,6 µm und bestehen aus 93—99, insbesondere 96—99 Gew.-%, Kernmaterial, und aus 7—1, insbesondere 4—1 Gew.-% aufpolymerisiertem Kautschuk, vorzugsweise mit Glasübergangstemperaturen kleiner 10°C, insbesondere kleiner −10°C.

Die in den erfindungsgemäßen Polymerisaten aufpolymerisierten alkylacrylat kautschuken mit Glastemperatur <30°C leiten sich z.B. von Monomeren aus der Reihe der Acrylsäurealkylester mit bis zu 8C-Atomen im Alkoholteil ab und können gegebenenfalls bis zu 50 Gew.-%, insbesondere bis zu 30 Gew.-% Comonomere wie Styrol, Acrylnitril oder Alkylmethacrylat enthalten, wobei der Kautschukcharakter der aufpolymerisierten Polymerisate gewahrt bleiben muß.

Diese kautschukartigen Polymerisate sind also auf die Teilchen aufpolymerisiert, d.h. physikalisch oder chemisch daran gebunden; bevorzugt sind Polymerisate, bei denen die aufpolymerisierten Kautschuke nicht oder wenig gepfropft sondern physikalisch an den Teilchenoberflächen fixiert sind.

Handelt es sich bei den erfindungsgemäßen teilchenförmigen Polymerisaten um Pfropfpolymerisate aus einem Kern (a) und einer Harzpfropfhülle (b), so hat der Kern (a) bevorzugt einen mittleren Teilchendurchmesser ($d_{50}$) von 0,09—0,5 µm und das Gewichtsverhältnis von Kern (a) zu Hülle (b) ist 10 bis 80 zu 90 zu 20, insbesondere 20 bis 80 zu 80 bis 20. Das Kernmaterial (a) ist vorzugsweise vernetzt, insbesondere hochvernetzt, und besteht bevorzugt aus einem Kautschuk auf der Basis von Dienen, Olefinen oder Alkylacrylaten.

Bevorzugtes Material des Kerns (a) ist ein vernetzter Kautschuk aus einem oder mehreren konjugierten Dienen, z.B. Polybutadien oder ein Copolymerisat eines konjugierten Diens mit einem ethylenisch ungesättigten Monomer wie Styrol und/oder Acrylnitril oder ein vernetzter Acrylatkautschuk insbesondere ein vernetztes Polymerisat aus Acrylsäurealkylestern gegebenenfalls in Mischung mit bis zu 40 Gew.-% anderer Vinylmonomerer.

Zu den geeigneten polymerisierbaren Acrylsäureestern gehören $C_1$—$C_8$-Alkylester, beispielsweise Methyl-, Ethyl-, Butyl-, Octyl- und 2-Ethylhexylester, Halogenalkylestern, bevorzugt $C_1$—$C_8$-Halogenalkylester, wie Chlorethylacrylat, und aromatische Ester wie Benzylacrylat und Phenethylacrylat. Sie können einzeln oder in Mischung eingesetzt werden, wobei mindestens ein Alkylester im Gemisch vorhanden sein soll. Zur Vernetzung werden polyfunktionelle Monomere copolymerisiert. Beispiele sind Ester von ungesättigten Carbonsäuren mit einem Polyol (vorzugsweise 2 bis 20 Kohlenstoffatome in der Estergruppe), wie Ethylenglykoldimethylacrylat, Ester einer mehrfunktionellen Carbonsäure mit einem ungesättigten Alkohol (vorzugsweise 8 bis 30 Kohlenstoffatome im Esterrest), Triallylcyanurat, Triallylisocyanurat, Divinylverbindungen wie Divinylbenzol; Ester ungesättigter Carbonsäuren mit ungesättigten Alkoholen (bevorzugt 6 bis 12 Kohlenstoffatome im Esterrest), wie Allylmethacrylat; Phosphorsäureester, beispielsweise Triallylphosphat und 1,3,5-Triacryloylhexahydro-s-triazin. Besonders bevorzugte polyfunktionelle Monomere sind Triallylcyanurat, Triallylisocyanurat, Triallylphosphat, Allylmethacrylat, Ethylenglykoldimethacrylat und 1,3,5-Triacryloylhexahydro-s-triazin.

Die Pfropfhülle (b) stellt dar ein Homo- oder Copolymerisat von Styrol, α-Methylstyrol, p-Methylstyrol, Methacrylsäureester, Acrylnitril, Methacrylnitril, Maleinimid ab; sie ist wenigstens partielle auf den Kern (a) aufgepfropft.

2

EP 0 216 139 B1

Die teilchenförmigen Polymerisate laut der Erfindung können gegebenenfalls im Gemisch mit spröden thermoplastischen Harzen, als thermoplastische Formmasse verwendet werden: Als spröde Harze sind geeignet z.B. Polyvinylchlorid, Styrol-Acrylnitril-Copolymerisat, Polystyrol und Polymethylmethacrylat oder α-Methylstyrol-Acrylnitril-Co- oder Terpolyomerisate.

Zur Herstellung dieser thermoplastischen Formmassen können die erfindungsgemäßen teilchenförmigen Polymerisate in Form von Pulver eingesetzt werden; üblicherweise wird ein solches Pulver zusammen mit dem thermoplastischen Harz geschmolzen und diese Mischung dann thermoplastisch verarbeitet. Man kann auch die Emulsion der erfindungsgemäßen teilchenförmigen Polymerisate mit geeigneten Emulsionen oder Dispersionen der spröden thermoplastischen Harze (z.B. Styrol-Acrylnitril-Copolymerisat) mischen, gemeinsam fällen und dann direkt zur thermoplastischen Verarbeitung einsetzen.

Die teilchen förmigen Polymerisate lauf der Erfindung können hergestellt werden in dem man (1) in wässriger Emulsion durch radikalisch initiierte Polymerisation harzbildende Monomere auf einen Kautschuk aus der Reihe der Dien-, Olefin- und/oder Alkylacrylatpolymeren pfropfpolymerisiert, (2) nach einem Polymerisationsumsatz, bezogen auf die Summe der harzbildenden Monomeren von größer 90 Gew.-%, ein Monomer oder eine Monomermischung zufügt, die ein kautschukartiges Homo- oder Copolymerisat mit Glastemperaturen kleiner 30°C ergibt, in einer Menge von 1—10 Gew.-%, bezogen auf die gesamte Reaktionsmischung, und (3) diese Monomeren radikalisch aufpolymerisiert.

In der ersten Stufe des Verfahrens werden also in herkömmlicher Weise harzbildende Monomere pfropfcopolymerisiert. Dieses Verfahren wird in wässriger Emulsion durchgeführt, wobei die harzbildenden Monomeren in Gegenwart eines der genannten Kautschuke pfropfcopolymerisiert werden. Diese Emulsionspolymerisation kann diskontinuierlich oder kontinuierlich durchgeführt werden, unter Einsatz von Emulgatoren, regelnden Additiven und Polymerisationsinitiatoren, insbesondere wasserlöslichen Initiatoren, bei Temperaturen von 20—100°C und pH-Werte von 12—2.

Dabei soll ein größerer Überschß an Emulgator, insbesondere im Endstadium der Polymerisation vermieden werden.

Nach einem Monomerumsatz von größer 90 Gew.-%, vorzugsweise größer 94 Gew.-%, besonders größer 98 Gew.-% werden die Alkylacrylatkautschuk bildenden Monomeren zugefügt und radikalisch polymerisiert, wobei kein weiterer Emulgator oder Regler zugefügt werden soll, eventuell aber Initiator nachdosiert werden muß. Bevorzugt ist die Polymerisation ohne Zusatz von weiteren Initiatoren, also allein durch Monomerzugabe.

Bei dieser Polymerisation wird das gebildete kautschukartige Polymerisat auf der Latexteilchenoberfläche der vorgebildeten Polymerisate fixiert, und eventuelle Restmonomere der vorausgehenden Polymerisation copolymerisiert. Dieses Fixieren kann eine Pfropfcopolymerisation sein oder eine physikalische Anlagerung des kautschukartigen Polymerisates an die Oberfläche der vorgebildeten Teilchen. Besonders hochwertige Polymerisate im Sinne der Erfindung werden erhalten, wenn eine Pfropfung weitestgehend unterdrückt wird.

Nach Polymerisation der die kautschukartigen Homo- oder Copolymerisat bildenden Monomere fallen teilchenförmige Polymerisate bzw. Pfropfpolymerisate in Latexform (Emulsion) an.

Solche Emulsionen lassen sich durch Koagulation mit Säuren, Salzen oder Basen, Kälte oder Wärme oder durch Sprühtrocknung zu Pulver aufarbeiten. Bevorzugt koaguliert man bei Temperaturen von über 50°C. Nach Reinigung der Koagulate z.B. durch Waschen, werden die feuchten Polymerisate zu Pulvern getrocknet.

Die erfindungsgemäßen Emulsionen teilchenförmiger Pfropfpolymerisate bzw. die erfindungsgemäßen Polymerisatpulver lassen sich hervorragend zur Herstellung von thermopolastischen Formkörpern verwenden. Zu deren Herstellung können die erfindungsgemäßen Polymerisate direkt thermoplastisch verarbeitet werden, gegebenenfalls unter Abdestillation flüchtiger Komponenten und gegebenenfalls unter Zusatz bekannter Antioxidatien, Gleitmittel. Farbstoffe, Pigmente, Flammschutzadditive oder Antistatika bzw. Füllstoffe.

Andererseits lassen sich auch Mischungen der erfindungsgemäßen Polymerisate verarbeiten.

Die Polymerisate können z.B. als Pulver auch in Mischung mit anderen Thermoplasten, die z.B. als Granulat oder Pulver vorliegen, verarbeitet werden.

Zur thermoplastischen Verarbeitung sind die bekannten Aggregate wie Schnecken, Extruder, Kolander, Kneter und Walzen verwendbar.

Thermoplastische Formmassen, die erfindungsgemäß Polymerisate enthalten, zeichnen sich durch hohe Thermostabilität, verbesserte Verarbeitbarkeit und verbesserte mechanische Eigenschaften aus.

Die Emulsionen der erfindungsgemäßen Polymerisate besitzen auch verbessertes Reinigungsverhalten (beim Waschen) und verbessertes Entwässerungsverhalten (z.B. in Zentrifugen oder Pressen).

Die anfallenden Pulver besitzen erhöhte Schüttdichte bei verbesserter Rieselfähigkeit, geringen Staubanteil, gute Lagerfähigkeit ohne Verklumpung und einheitliche Korngrößen.

## Beispiele

Verwendeter Kautschuk als Pfropfgrundlage

A: Wässrige Emulsion eines Styrol-Butadien-Copolymerisates mit 35 Gew.-% einpolymerisiertem

3

Styrol, Feststoffgehalt 30 Gew.-%; Mittlerer Teilchendurchmesser des Polymerisates: 0,11 μm ($d_{50}$-Wert); Gelgehalt des Polymeren: 89 Gew.-%.

Erfindungsgemäße Polymerisate und Vergleichsversuche

I: In einem Reaktor vorgelegt werden 1715 Gew.-Teile Wasser, 4 Gew.-Teile Na-Salz der disproportionierten Abietinsäure und 3 Gew.-Teile In-Natronlauge. Mittels Initiierung mit einer Lösung aus 4 Gew.-Teile Kaliumperoxidsulfat in 140 Gew.-Teile Wasser wird folgende Monomermischung bei 80°C copolymerisiert,

483 Gew.-Teile α-Methylstyrol
777 Gew.-Teile Methylmethacrylat
140 Gew.-Teile Acrylnitril
3,5 Gew.-Teile tert.-Dodecylmercaptan wobei während der 6stündigen Zudosierungszeit der Monomermischung gleichzeitig folgende Emulgatorlösung in den Raktor eingespeist wird:

860 Gew.-Teile Wasser
25 Gew.-Teile Na-Salz der disproportionierten Abietinsäure
18 In-Natronlauge

Nach Zulaufende wird 4 Std. bei 89°C nachgerührt; der Monomerumsatz beträgt dann 98 Gew.-%.
Nun wird der anfallende Latex wie folgt weiterverarbeitet:

I.1 Polymerisation wird abgebrochen (Vergleich)

Nach Stabilisierung mit 0,8 Gew.-Tle phenolischen Antioxidantien werden die Latices bei 95—98°C mittels einer 1:1-Mischung aus Essigsäure und Mg-Sulfat koaguliert.

Der anfallende Polymerisatbrei wird auf einer Laborschleuder (φ 30 cm, 1400 U/Min. Beschickung 1400 g Polymerisattrockengewicht) unter konstanten Bedingungen gewaschen (bis zur Elektrolytfreiheit des Waschwassers) und trockengeschleudert. Es ergeben sich folgende Werte; Schüttgewichte werden bestimmt nach Entwässerung des Polymerisat-Feuchtgutes bei 80°C.

|      | Zeit bis zur Elektrolytfreiheit | Schüttgewicht des trockenen Pulvers (g/l) |
|------|---------------------------------|--------------------------------------------|
| I.1  | 3 Std.                          | 190                                        |

II. In einem Reaktor vorgelegt werden 927 Gew.-Teile Latex A und 643 Teile Wasser. Bei 70°C wird mittels Kaliumperoxidisulfat initiiert (5 Gew.-Teile). Innerhalb von 5 Std. werden bei 70°C folgende Mengenströme in den Reaktor eingespeist:

1) 386 Gew.-Tle α-Methylstyrol
622 Gew.-Tle Methylmethacrylat
112 Gew.-Tle Acrylnitril
1,5 Gew.-Tle tert.-Dodecylmercaptan
2) 1430 Gew.-Tle Wasser
25 Gew.-Tle Na-Salz der disproportionierten Abietinsäure
20 Gew.-Teile In-Natronlauge.

Nach Zulaufende wird 5 Std. bei 70°C nachpolymerisiert. Monomerumsatz beträgt 97 Gew.-%.
Anschließend werden verschiedene Ansätze wie folgt nachbehandelt:

II.1 Polymerisation wird abgebrochen (Vergleich)

| II.2  | Zugabe einer Mischung aus | 32 Gew.-Tle n-Butylacrylat 24 Gew.-Tle Styrol |
|-------|---------------------------|------------------------------------------------|
| II.3  | Zugabe von                | 56 Gew.-Tle Ethylacrylat                       |
| III.4 | Zugabe von                | 56 Gew.-Tle Ethylhexylacrylat                  |
| III.5 | Zugabe von                | 28 Gew.-Tle Ethylhexylacrylat 28 Gew.-Tle Styrol |

4

Nach Zugabe der Monomeren (II.2 bis II.5) wird wie bei den Beispielen I.2 bis I.5 weitergearbeitet. Es ergeben sich folgende Daten:

|  | Zeit bis zur Elektrolytfreiheit | Restfeuchte nach Trockenschleudern | Schüttgewicht (g/e) |
|---|---|---|---|
| II.1 | 1,5 Std. | 72 Gew.-% | 280 |
| II.2 | 0,5 Std. | 59 Gew.-% | 350 |
| II.3 | 0,5 Std. | 60 Gew.-% | 300 |
| II.4 | 0,4 Std. | 60 Gew.-% | 355 |

Erfindungsgemäße Formmassen und Vergleichsversuche

PVC: PVC-Masse-Polymerisat (Vestolit M6807 der Chem. Werke Hüls), K-Wert des PVC ist 68.

III. 50 Gew.-Teile PVC und 50 Gew.-Teile der Polymerisate II.1 bis II.5 werden unter Einsatz eines Gleitmittels (0,2 Teile Loxiol G70) und Stabilisatoren (1,5 Teile Irgastab 17M) auf einer Walze innerhalb von 10 Min. bei 185°C compoundiert. Aus dem Compound werden danach Platten einer Dicke von 4 mm durch Pressen bei 190°C in 10 Min. hergestellt.

Eine andere Prüfserie wird bei 181°C 30 Min. lang compoundiert. An daraus hergestellten Prüfkörpern (Platten) wird der Rohton visuell beurteilt.

| Compound mit | II.1 | II.2 | III.3 | II.4 | II.5 |
|---|---|---|---|---|---|
| Schlagzähigkeit | n.g. | n.g. | n.g. | n.g. | n.g. |
| Kerbschlagzähigkeit (kg/m$^2$) | 5,5 | 7 | 7,5 | 7 | 7 |
| Formbeständigkeit Vicat B (°C) | 94 | 95 | 94 | 95 | 94 |
| Thermostabilitätsvergleich[1] | | | | | |
| nach 10 Min. Compoundieren | + | ++ | ++ | + | ++ |
| nach 30 Min. Compoundieren | − | + | ++ | ++ | ++ |

[1] ++ keine Verfärbung
+ fast keine Verfärbung
− deutliche Verfärbung
n.g. = nicht gebrochen

IV. Eigenschaften der Pfropfpolymerisate als Thermoplast
Thermoplastische Eigenschaften der Pfropfpolymerisate

Die Pfropfpolymerisate II.1 bis II.5 werden unter Zusatz von 0,2 Teile Loxiol G70 thermoplastisch bei 220°C verarbeitet. Die Spritzgußkörper besitzen folgende Eigenschaften:

| Produkt | II.1 | II.2 | II.3 | II.4 |
|---|---|---|---|---|
| Kugeldruckhärte (MPA 30'') | 98 | 97 | 98 | 97 |
| Schlagzähigkeit (kg/m$^2$) | 52 | 70 | 68 | 72 |
| Vicat B (°C) | 110 | 110 | 110 | 110 |
| MFI-Wert (220°C/10 kg) | 14 | 19 | 20 | 20 |

Anhang zu im Text verwendeten Meßmethoden

d$_{50}$-Werte sind mittlere Teilchendurchmesser, ermittelt durch Ultrazentrifugenmessung, s. dazu: W. Scholtan et al. Colloids Z. Polymere, 250 (1972), S. 783—796

| | |
|---|---|
| Kugeldruckhärte, | bestimmt nach DIN 53456 |
| Schlagzähigkeit, | bestimmt nach DIN 53453 |
| Kerbschlagzähigkeit, | bestimmt nach DIN 53453 |
| Wärmeformbeständigkeit, | bestimmt nach DIN 53460 |
| MFI-Wert, | bestimmt nach DIN 53735 |

**Patentanspruch**

Teilchenförmige Polymerisate mit mittleren Teilchendurchmessern (d$_{50}$) von 0,08—1,5 μm aus 90—99 Gew.% eines Kernmaterials aus Homo- oder Copolymerisat von Styrol, α-Methylstyrol, p-Methylstyrol, Methacrylsäureester, Acrylnitril, Methacrylnitril oder Maleinimid, pfropfpolymerisiert auf einen Kautschuk und 10—1 Gew.% auf die Oberfläche des Kernmaterials aufpolymerisierten Alkylacrylatkautschuken mit Glastemperaturen <30°C.

**Revendication**

Polymérisats en particules présentant des diamètres moyens (d$_{50}$) de particules de 0,08 à 1,5 μm, constitués de 90 à 99% en poids d'un noyau formé d'homopolymérisat ou de copolymérisat de styrène, d'α-méthylstyrène, de β-méthylstyrène, d'ester d'acide méthacrylique, d'acrylonitrile, de méthacrylonitrile ou de maléimide, polymérisés par greffage sur un caoutchouc, et de 10 à 1% en poids de caoutchoucs d'acrylate d'alkyle polymérisés à la surface du noyau, ayant des températures de transition vitreuse inférieures à 30°C.

**Claim**

Particulate polymers having average particle diameters (d$_{50}$) of 0.08 to 1.5 μm of 90 to 99% by weight of a core material of a homo- or copolymer of styrene, α-methyl styrene, p-methyl styrene, methacrylate, acrylonitrile, methacrylonitrile or maleic imide graft-polymerized onto a rubber and 10 to 1% by weight alkylacrylate rubbers having glass temperatures <30°C polymerized onto the surface of the core material.